# EUROPEAN PATENT SPECIFICATION

(11) **EP 1 413 501 B1**
(45) Date of publication and mention of the grant of the patent: **20.07.2005**
(21) Application number: 02425643.0
(22) Date of filing: 25.10.2002
(51) Int. Cl.: B62D 25/08, B60K 11/04

(54) **Integrated front structure for vehicles**
Integrierter Kraftfahrzeug-Vorderbau
Structure avant integrée pour véhicules automobiles

(43) Date of publication of application: 28.04.2004
(73) Proprietor: DENSO THERMAL SYSTEMS S.p.A., 10046 Poirino (Torino) (IT)
(72) Inventor: Masciandara, Eustachio, 10098 Rivoli (Torino) (IT)
(74) Representative: Marchitelli, Mauro

(56) References cited:
- EP-A- 0 652 150
- EP-A- 0 945 330
- EP-A- 1 205 332
- WO-A-99/54187
- DE-A- 19 831 256
- US-A- 5 271 473
- US-B1- 6 450 276

## Description

The present invention relates to a front heat-exchange assembly for vehicles of the type defined in the preamble of the main claim.

The front heat-exchange assembly of a vehicle comprises a radiator for the cooling of the internal-combustion engine and, in the case of vehicles provided with air-conditioning systems, a condenser which is normally set facing the radiator and in front of the latter. The radiator and, if present, the condenser are carried by a supporting structure made of plastic material, which is fixed to the front part of the body of the vehicle and which is also used for fixing other components and devices of the vehicle, such as for instance, the headlights.

The supporting structure has a central opening in a position corresponding to which there is located the radiator and possibly the condenser. Said opening is delimited at the bottom and at the top by a pair of supporting cross members, formed integrally with the remaining part of the supporting structure and to which there are fixed, in such a way that they can be taken down, the radiator and the condenser. In the traditional solutions, the removal of the radiator and of the condenser for interventions of maintenance or repair is performed with a top-down movement, and to carry out this type of intervention it is necessary to have the vehicle on a hydraulic-power lift or in a position corresponding to a pit.

DE-A-19831256 discloses a heat exchange assembly according to the preamble of claim 1, including a support structure carrying an intermediate frame with vertical guides engaged by lateral portions of the radiator and condenser.

The object of the present invention is to provide a heat-exchange assembly with a supporting structure which simplifies assembly and disassembly of various components of the heat exchange module.

According to the present invention, the above object is achieved by a front heat-exchange assembly for vehicles having the characteristics forming the subject of the main claim.

The present invention will now be described in detail with reference to the attached drawings, which are provided purely by way of non-limiting example and in which:
- Figure 1 is a schematic perspective view of a front heat-exchange assembly for vehicles according to the present invention;
- Figure 2 is a partially exploded perspective view of the heat-exchange assembly of Figure 1;
- Figure 3 is an exploded front view of the heat-exchange assembly according to the present invention; and
- Figure 4 is a partial cross section taken along the line IV-IV of Figure 1.

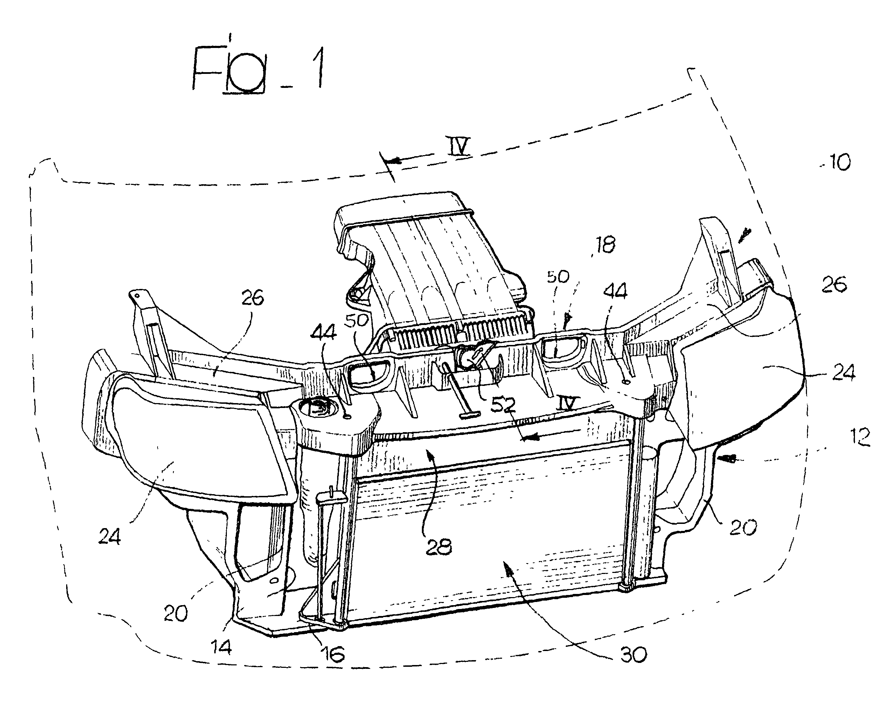

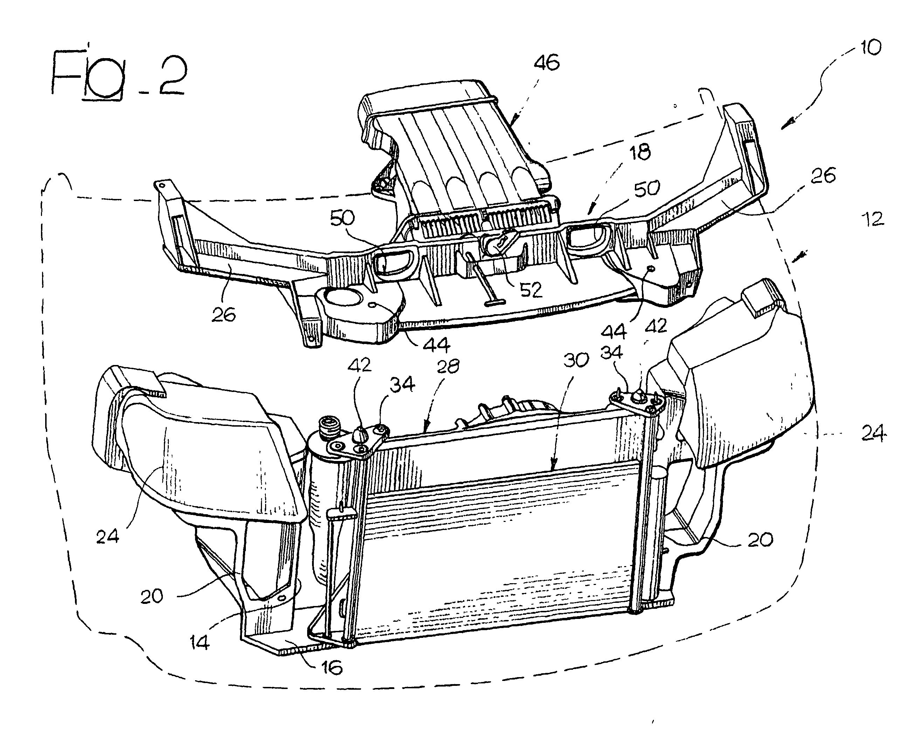

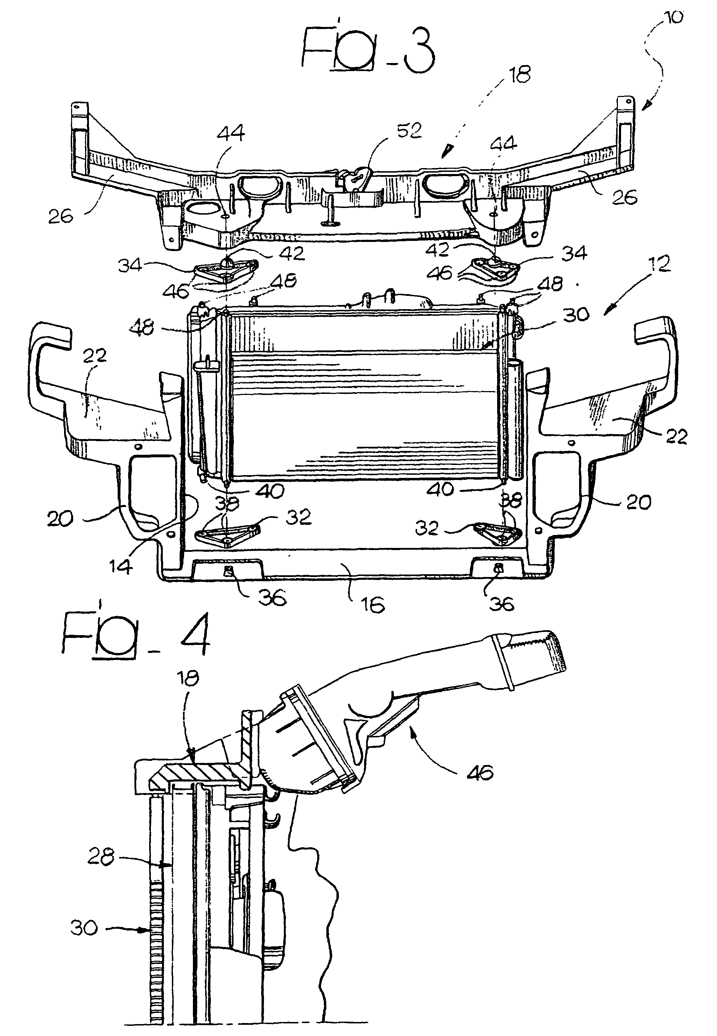

With reference to the drawings, the number 10 designates a front heat-exchange module for vehicles according to the present invention. The module 10 comprises a supporting structure made of plastic material designated as a whole by 12, which has a central opening 14 defined by a bottom supporting cross member 16, a top supporting cross member 18, and a pair of side uprights 20. According to the present invention, the bottom supporting cross member 16 and the side uprights 20 are made of a single piece, preferably by means of injection moulding, whilst the top supporting cross member is a separate component, which is fixed in a removable way to the remaining part of the supporting structure 12. As is illustrated clearly in Figures 2 and 3, after removal of the top supporting cross member 18, the central opening 14 is open upwards.

The side uprights 20 have, at their tops, seats 22 (see Figure 3) designed to receive the headlights 24 of the vehicle (Figures 1 and 2). The seats 22 are at least partially open upwards as illustrated in Figure 3, and the open parts of the seats 22 are closed by side portions 26 of the top supporting cross member 18.

The heat-exchange assembly 10 comprises a radiator for cooling the engine 28 and possibly a condenser 30 forming part of an air-conditioning system of the vehicle. The radiator 28 and the condenser 30 are housed in the central opening 14 of the supporting structure 12. The radiator 28 and the condenser 30 can be connected to the supporting structure 12 in the way described in detail in a simultaneous patent application filed by the present applicant. As may be seen in Figure 3, in the preferred embodiment of the present invention, the radiator 28 and the condenser 30 are connected to the supporting structure 12 by means of a pair of bottom supporting plates 32 and a pair of top supporting plates 34. The bottom supporting plates 32 are provided with respective pins (not illustrated) which engage holes 36 in the bottom supporting cross member 16 and have holes 38 that are engaged by bottom projecting pins 40 of the radiator 28 and of the condenser 30. In a similar way, the top supporting plates 34 are provided with pins 42 that engage respective holes 44 in the top supporting cross member 18 and have holes 46 that are engaged by top pins 48 of the radiator 28 and of the condenser 30. Preferably, the pins of the plates 32, 34 are calibrated-failure elements, designed to yield in the event of frontal impact of the vehicle to enable the radiator and the condenser to move backwards without suffering any damage.

With this system of fixing, the radiator 28 and the condenser 30 can be removed separately from one other with an upward movement from beneath after disassembly of the top supporting cross member 18. The top supporting cross member 18 can be fixed to the remaining part of the supporting structure 12 by means of screws (not illustrated).

As can be seen in Figures 2 and 3, after disassembly of the top supporting cross member 18, the opening 14 is completely open at the top and there is ample access from above to the radiator 28 and to the condenser 30, whilst there is the possibility of removing the radiator 28 or the condenser 30 independently of one another with an upward movement. In particular, the operator can carry out removal of the radiator 28 or of the condenser 30 without having to intervene on the lower part of the vehicle, and hence without the need to have the vehicle on a hydraulic-power lift or else over a pit.

As compared to the case in which the supporting structure made of plastic material 12 is formed by a single monolithic component, the fact that the top supporting cross member 18 is made as a separate component enables reduction of the dimensions of the dies that are used to form the two parts of the supporting structure 12. The top supporting cross member 18 made as a separate component enables diversification of vehicle or engine versions, maintaining the bottom structure unvaried. In particular, as is illustrated in Figures 1, 2 and 4 according to a preferred embodiment of the present invention the supporting cross member 18 carries a casing 46 for the filter of the air of the internal-combustion engine. The casing 46 can be made at least in part integrally with the top supporting cross member 18 and is equipped with a lid or a removable section, which can be connected via snap-action or else by means of screws to the part of the casing 46 formed integrally with the top supporting cross member 18. In Figures 1 and 2, the number 50 designates the opening for the inlet of the air flow into the casing 46 of the filter, which can be made on the part of the casing 46 formed integrally with the top supporting cross member 18.

The top supporting cross member 18 can moreover be provided with a seat designed to receive the mechanism for closing the bonnet of the vehicle.

## Claims

1. Front heat-exchange assembly for vehicles, comprising:
- a supporting structure (12) having a central opening (14), defined by a bottom supporting cross member (16), a top supporting cross member (18), and a pair of side uprights (20), wherein the top cross member (18) is connected in a removable way to the remaining part of the supporting structure (12); and
- at least one heat-exchange device (28, 30) carried by said supporting structure (12) and housed in said central opening (14),
**characterized in that** said side uprights (20) have, on their tops, respective seats (22), designed to receive the headlights of the vehicle, said seats (22) being at least partially open at the top and that said top supporting cross member (18) comprises side portions (26), which close, at the top, said seats for the headlights (22).

2. The heat-exchange assembly according to Claim 1, **characterized in that** the aforesaid central opening (14) is completely open at the top, following upon removal of said top cross member (18), in such a way that it is possible to remove said heat-exchange device (28, 30) with a movement from below upwards after removal of said top supporting cross member (18).

3. The heat-exchange assembly according to Claim 1, **characterized in that** said top supporting cross member (18) is made of injection-moulded plastic material.

4. The heat-exchange assembly according to Claim 3, **characterized in that** said top supporting cross member (18) carries a casing (46) for a filter of the air of the internal-combustion engine of the vehicle.

5. The heat-exchange assembly according to Claim 4, **characterized in that** the aforesaid casing (46) for the filter of the air of the internal-combustion engine is at least in part made integrally with said top supporting cross member (18).

6. The heat-exchange assembly according to Claim 3, **characterized in that** said top supporting cross member (18) comprises an integral seat (52) for a device for closing the bonnet of the vehicle.

7. The heat-exchange assembly according to Claim 1, **characterized in that** said at least one heat-exchange device (28, 30) is connected to the supporting structure (12) by means of a pair of bottom supporting plates (32) and a pair of top supporting plates (34), said plates (32, 34) being provided with holes designed to receive projecting pins (40, 48) of said heat-exchange device (28, 30) and being provided with pins (42) designed to engage holes (36, 44) made on said bottom supporting cross member (16) and said top supporting cross member (18).

8. The heat-exchange assembly according to Claim 7, **characterized in that** said pins (42) constitute preferential-failure elements.

## Patentansprüche

1. Warmeaustausch-Frontbaugruppe für Kraftfahrzeuge, umfassend
- eine Tragstruktur (12) mit emer zentralen Öffnung (14), die durch em unteres Quertragelement (16), ein oberes Quertragelement (18) und ein Paar Seitenstutzen (20) abgegrenzt ist, wobei das obere Querelement (18) auf abnehmbare Weise mit dem ubngen Teil der Tragstruktur (12) verbunden ist, und
- wenigstens eine Warmeaustauschvornchtung (28, 30), die von der Tragstruktur (12) getragen und in der zentralen Offnung (14) eingeschlossen ist,
**dadurch gekennzeichnet, dass**
die Seitenstutzen (20) auf ihren Oberseiten jeweilige Sitze (22) aufweisen, die so ausgelegt sind, dass sie die Scheinwerfer des Kraftfahrzeugs aufnehmen, wobei die Sitze (22) an der Oberseite wenigstens teilweise offen smd, und dass das obere Quertragelement (18) Seitenteile (26) umfasst, welche die Sitze (22) fur die Scheinwerfer an der Oberseite verschließen.

2. Warmeaustausch-Baugruppe gemaß Anspruch 1, **dadurch gekennzeichnet, dass** die zentrale Öffnung (14) im Anschluss an die Entfernung des oberen Querelementes (18) an der Oberseite ganz offen ist, und zwar so, dass es moglich ist, die Warmeaustauschvornchtung (28, 30) nach Entfernung des oberen Quertragelementes (18) mit emer Bewegung von unten nach oben abzunehmen.

3. Wärmeaustausch-Baugruppe gemaß Anspruch 1, **dadurch gekennzeichnet, dass** das obere Quertragelement (18) aus Spritzguss-Kunststoff hergestellt ist.

4. Warmeaustausch-Baugruppe gemaß Anspruch 3, **dadurch gekennzeichnet, dass** das obere Quertragelement (18) eine Einfassung (46) fur einen Filter der Luft des Verbrennungsmotors des Kraftfahrzeugs trägt.

5. Warmeaustausch-Baugruppe gemaß Anspruch 4, **dadurch gekennzeichnet, dass** die Emfassung (46) fur den Filter der Luft des Verbrennungsmotors wenigstens z T an das obere Quertragelement (18) angeformt ist

6. Warmeaustausch-Baugruppe gemaß Anspruch 3, **dadurch gekennzeichnet, dass** das obere Quertragelement (18) einen angegossenen Sitz (52) für eine Vorrichtung zum Schließen der Haube des Kraftfahrzeugs umfasst.

7. Warmeaustausch-Baugruppe gemaß Anspruch 1, **dadurch gekennzeichnet, dass** die wenigstens eine Warmeaustauschvorrichtung (28, 30) mittels eines Paars unterer Tragplatten (32) und eines Paars oberer Tragplatten (34) mit der Tragstruktur (12) verbunden ist, wobei die Platten (32, 34) mit Lochern versehen smd, die so ausgelegt sind, dass sie vorstehende Tragzapfen (40, 48) der Warmeaustauschvornchtung (28, 30) aufnehmen, und mit Tragzapfen (42) versehen sind, die so ausgelegt sind, dass sie in Löcher (36, 44) eingreifen, die an dem unteren Quertragelement (16) und dem oberen Quertragelement (18) angebracht sind

8. Warmeaustausch-Baugruppe gemaß Anspruch 7, **dadurch gekennzeichnet, dass** die Tragzapfen (42) Sollbruchglieder bilden

## Revendications

1. Ensemble d'échange de chaleur avant pour véhicules, comprenant :
une structure de support (12) dotée d'une ouverture centrale (14), définie par une traverse de support inférieure (16), une traverse de support supérieure (18) et une paire de montants latéraux (20), dans lequel la traverse supérieure (18) est raccordée d'une manière amovible à la partie restante de la structure de support (12) ; et
au moins un dispositif d'échange de chaleur (28, 30) supporté par ladite structure de support (12) et logé dans ladite ouverture centrale (14),
**caractérisé en ce que** lesdits montants latéraux (20) possèdent, sur leurs parties supérieures, des sièges (22) respectifs, conçus pour recevoir les phares du véhicule, lesdits sièges (22) étant au moins partiellement ouverts au niveau de la partie supérieure et **en ce que** ladite traverse de support supérieure (18) comprend des parties latérales (26), qui ferment, au niveau de la partie supérieure, lesdits sièges destinés aux phares (22).

2. Ensemble d'échange de chaleur selon la revendication 1, **caractérisé en ce que** l'ouverture centrale (14) mentionnée précédemment est complètement ouverte au niveau de la partie supérieure, suite au retrait de ladite traverse supérieure (18), de sorte qu'il est possible de retirer ledit dispositif d'échange de chaleur (28, 30) avec un mouvement de bas en haut après le retrait de ladite traverse de support supérieure (18).

3. Ensemble d'échange de chaleur selon la revendication 1, **caractérisé en ce que** ladite traverse de support supérieure (18) est réalisée avec une matière plastique moulée par injection.

4. Ensemble d'échange de chaleur selon la revendication 3, **caractérisé en ce que** ladite traverse de support supérieure (18) supporte un carter (46) pour un filtre à air du moteur à combustion interne du véhicule.

5. Ensemble d'échange de chaleur selon la revendication 4, **caractérisé en ce que** le carter (46) mentionné précédemment pour le filtre à air du moteur à combustion interne est au moins en partie réalisé de manière solidaire avec ladite traverse de support supérieure (18).

6. Ensemble d'échange de chaleur selon la revendication 3, **caractérisé en ce que** ladite traverse de support supérieure (18) comprend un siège (52) solidaire pour un dispositif permettant de fermer le capot du véhicule.

7. Ensemble d'échange de chaleur selon la revendication 1, **caractérisé en ce que** ledit au moins un dispositif d'échange de chaleur (28, 30) est raccordé à la structure de support (12) au moyen d'une paire de plaques de support inférieures (32) et d'une paire de plaques de support supérieures (34), lesdites plaques (32, 34) étant prévues avec des trous conçus pour recevoir des broches en saillie (40, 48) dudit dispositif d'échange de chaleur (28, 30) et étant prévues avec des broches (42) conçues pour mettre en prise des trous (36, 44) réalisés sur ladite traverse de support inférieure (16) et ladite traverse de support supérieure (18).

8. Ensemble d'échange de chaleur selon la revendication 7, **caractérisé en ce que** lesdites broches (42) constituent des éléments à rupture préférentielle.
